(19) **Europäisches Patentamt**
**European Patent Office**
**Office européen des brevets**

(11) **EP 2 079 124 A1**

(12) **EUROPEAN PATENT APPLICATION**
published in accordance with Art. 153(4) EPC

(43) Date of publication:
**15.07.2009 Bulletin 2009/29**

(21) Application number: **07829380.0**

(22) Date of filing: **02.10.2007**

(51) Int Cl.:
*H01M 8/04* (2006.01)  *C10M 105/50* (2006.01)
*C10M 107/38* (2006.01)  *C10M 107/50* (2006.01)
*C10N 30/00* (2006.01)  *C10N 30/06* (2006.01)
*C10N 40/34* (2006.01)  *C10N 50/02* (2006.01)
*F16L 37/32* (2006.01)

(86) International application number:
**PCT/JP2007/069642**

(87) International publication number:
**WO 2008/041779 (10.04.2008 Gazette 2008/15)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **03.10.2006 JP 2006271754**

(71) Applicants:
• **Toyo Seikan Kaisha, Ltd.**
**Tokyo 100-8522 (JP)**
• **Kabushiki Kaisha Toshiba**
**Minato-ku,**
**Tokyo 105-8001 (JP)**

(72) Inventors:
• **YOSHIHIRO, Kenji**
**Yokohama-shi, Kanagawa 2300001 (JP)**
• **KINOUCHI, Kouki**
**Yokohama-shi, Kanagawa 2300001 (JP)**
• **YAMAMORI, You**
**Yokohama-shi, Kanagawa 2300001 (JP)**
• **TAKAHASHI, Kenichi**
**Yokohama-shi, Kanagawa 2358522 (JP)**

(74) Representative: **Jönsson, Hans-Peter**
**Patentanwälte von Kreisler Selting Werner**
**Deichmannhaus am Dom**
**Bahnhofsvorplatz 1**
**50667 Köln (DE)**

(54) **COUPLER FOR FUEL CELL**

(57) A recess 32a is formed in the foremost end portion of an insertion portion of a plug P10. A lubricating film 72 is provided as lubricating property imparting means 70 for imparting lubricating property to at least one of contact seal surfaces A formed by fitting and coupling of a socket S10 and the plug P10. Lubricating property is imparted to the contact seal surface A formed by fitting and coupling of the socket S10 and the plug P10 by the lubricating film 72 of the lubricating property imparting means 70 to thereby achieve smooth coupling and secure sealing property by close fitting of the socket S10 with the plug P10.

FIG.1A

EP 2 079 124 A1

# FIG.1B

# FIG.1C

## Description

Technical Field

This invention relates to a coupler for a fuel cell consisting of a socket and a plug which can be detachably coupled together for supplying liquid fuel from a cartridge to a fuel cell and, more particularly, to a coupler which can secure sealability at the time of attaching and detaching of the coupler when supply of liquid fuel is repeated frequently.

Background Art

Various liquid type fuel cells which can generate electricity directly from liquid fuel have recently been developed. A direct methanol fuel cell (DMFC) which uses methanol as its fuel has drawn attention for its use as a power source for portable type electronic devices, for it can be made compact without using a reforming device.

Particularly, in a passive type direct methanol fuel cell (DMFC), methanol is supplemented directly by coupling a fuel cartridge containing methanol which is liquid fuel to a fuel tank provided on the side of a fuel cell main body whereby a pump for supplying fuel becomes unnecessary and the fuel cell can be made further compact (Japanese Patent Application Laid-open Publication No. 2005-71713).

In such direct methanol fuel cell (DMFC), for supplying methanol as a fuel, a coupler consisting of a socket and a plug each having a valve and a spring which energizes the valve in closing direction is provided in a main body of a fuel cell and a cartridge storing methanol. This coupler is coupled to bring about a sealed state in which the valves communicate with each other to supply liquid fuel and is decoupled to bring about a sealed state in which the valves are closed.

Disclosure of the Invention

In a case where liquid fuel is supplied by coupling a fuel cartridge to a main body of a fuel cell through a coupler, liquid fued such as methanol is stored in the fuel cartridge in an amount necessary for supplying fuel several times, coupling and decoupling by the coupler are conducted each time fuel is supplied and it is required to sufficiently secure sealing property of the coupler until liquid fuel in the fuel cartridge is exhausted.

The present invention has been made for solving the problem and demand of the prior art. It is an object of the invention to provide a coupler for a fuel cell capable of securing sealing property in a case where the coupler is repeatedly coupled and decoupled.

For achieving the object of the invention, in the first aspect of the invention, there is provided a coupler for a fuel cell comprising a socket comprising a valve provided in a main body of a fuel cell and energizing means for energizing the valve in closing direction, and a plug comprising a valve provided in a main body of a cartridge storing liquid fuel for the fuel cell and energizing means for energizing the valve in closing direction, said plug being detachably fitted and coupled with the socket for bringing about a sealed state and opening the valves to supply the liquid fuel, wherein lubricating property imparting means is provided for imparting lubricating property to at least one of contact seal surfaces formed by fitting and coupling of the socket and the plug.

According to this coupler for a fuel cell, lubricating property imparting means is provided for imparting lubricating property to at least one of contact seal surfaces formed by fitting and coupling of the socket and the plug and, therefore, the socket and the plug can be fitted closely and smoothly whereby sufficient sealing property can be secured.

In the second aspect of the invention, there is provided a coupler for a fuel cell as defined in the first aspect wherein the lubricating property imparting means is formed by coating a non-eluting lubricant which prevents elution of impurities.

According to this coupler for a fuel cell, since the lubricating property imparting means is formed by coating a non-eluting lubricant which prevents elution of impurities, the socket and the plug can be fitted closely and smoothly whereby sufficient sealing property can be secured and, moreover, an adverse effect to the fuel cell by an eluting material from the lubricant can be prevented.

In the third aspect of the invention, there is provided a coupler for a fuel cell as defined in the first aspect wherein the lubricating property imparting means comprises a non-eluting lubricant which prevents elution of impurities and is made of either refined oil or refined oil diluted with an organic solvent.

According to this coupler for a fuel cell, since the lubricating property imparting means comprises a non-eluting lubricant which prevents elution of impurities and is made of either refined oil or refined oil diluted with an organic solvent, the socket and the plug can be fitted closely and smoothly whereby sufficient sealing property can be secured and, moreover, an adverse effect to the fuel cell by an eluting material can be prevented by making the lubricant with refined oil or refined oil diluted with an organic solvent.

In the fourth aspect of the invention, there is provided a coupler for a fuel cell as defined in any of the first to the third aspects wherein the lubricating property imparting means comprises a non-eluting lubricant which prevents elution of impurities added with an additive which prevents flowing down of the lubricant.

According to this coupler for a fuel cell, since the lubricating property imparting means comprises a non-eluting lubricant which prevents elution of impurities added with an additive which prevents flowing down of the lubricant, close fitting to the contact seal surface can be further improved.

In the fifth aspect of the invention, there is provided a coupler for a fuel cell as defined in the fourth aspect wherein the non-eluting lubricant which is coated has kinetic friction coefficient at the time when the lubricant is coated on a POM plate which is 1/5 or below kinetic friction coefficient at the time when the lubricant is not coated, has 2.0 or below of (kinetic friction coefficient after conducting rinsing with methanol after coating)/(kinetic friction coefficient after coating), and has a cation index I of 60 or below, said cation index I being expressed by formula I = A+2B+3C where A represents concentration (ppb) of monovalent metal ion, B represent concentration (ppb) of metal ion other than monovalent metal ion or trivalent metal ion and C represents concentration (ppb) of trivalent metal ion respectively in a methanol solution of the lubricant when 0.2g of the lubricant is dissolved in 50ml of methanol solution (1% water) and is kept at 60°C for one week.

According to this coupler for a fuel cell, a particularly preferably mode of the non-eluting lubricant mixed with an additive can be provided.

In the sixth aspect of the invention, there is provided a coupler for a fuel cell as defined in any of the first to the fifth aspects wherein the lubricating property imparting means comprises the non-eluting lubricant which prevents elution of impurities or the non-eluting lubricant added with the additive and the non-eluting lubricant is coated on a packing provided inside of a cap which covers and seals the plug in the main body of the cartridge so that the non-eluting lubricant can be transferred.

According to this coupler for a fuel cell, since the lubricating property imparting means comprises the non-eluting lubricant which prevents elution of impurities or the non-eluting lubricant added with the additive and the non-eluting lubricant is coated on a packing provided inside of a cap which covers and seals the plug in the main body of the cartridge so that the non-eluting lubricant can be transferred, sufficient lubricating property can be transferred and imparted in coupling and, in a normal state, an adverse effect to the main body of the fuel cell by the lubricant can be prevented to the maximum extent possible.

In the seventh aspect of the invention, there is provided a coupler for a fuel cell as defined in any of the third to the fifth aspects wherein the non-eluting lubricant used as the lubricating property imparting means is refined fluorine oil or refined silicon oil.

According to this coupler for a fuel cell, since the non-eluting lubricant used as the lubricating property imparting means is refined fluorine oil or refined silicon oil, the lubricant can be obtained easily while imparting sufficient lubricating property in coupling and an adverse effect to the main body of the fuel cell by the lubricant can be prevented to the maximum extent possible.

In the eighth aspect of the invention, there is provided a coupler for a fuel cell as defined in any of the first to the seventh aspects wherein the contact seal surface on which the lubricating property imparting means is provided is formed in a recess formed at the foremost end portion of an insertion portion of the plug.

According to this coupler for a fuel cell, since the contact seal surface is formed in a recess formed at the foremost end portion of an insertion portion of the plug, a small amount of the lubricant can be effectively used to function by, e.g., coating the lubricant in the recess and, moreover, when the coupler is decoupled, the remaining liquid fuel can be removed to prevent direct contact.

In the ninth aspect of the invention, there is provided a coupler for a fuel cell as defined in the eighth aspect wherein the recess in which the contact seal surface is provided is formed as a tapering recess with a top portion of an opening having a larger diameter than a bottom portion of the opening thereby improving lubricating property of the lubricating property imparting means.

According to this coupler for a fuel cell, since the recess in which the contact seal surface is provided is formed as a tapering recess with a top portion of an opening having a larger diameter than a bottom portion of the opening, lubricating property is improved by this feature in the configuration and the socket and the plug can be fitted closely and smoothly whereby sufficient sealing property can be secured.

In the tenth aspect of the invention, there is provided a coupler for a fuel cell as defined in any of the first to the ninth aspects wherein the lubricating property imparting means is formed as a lubricating component which is added to a material of at least one of the socket and the plug.

According to this coupler for a fuel cell, since the lubricating property imparting means is formed as a lubricating component which is added to a material of one or both of the socket and the plug, the material itself has lubricating property and the socket and the plug can be fitted closely and smoothly whereby sufficient sealing property can be secured.

In the eleventh aspect of the invention, there is provided a fuel cell comprising a coupler for a fuel cell as defined in any of the first to the tenth aspects, a fuel cartridge having the plug constituting the coupler, a fuel storing unit provided in the main body of the fuel cell for storing the liquid fuel supplied from the main body of the cartridge and having the socket constituting the coupler which can be coupled with the plug, and a power generation unit which is provided in the main body of the fuel cell and is supplied with the liquid fuel for generating power.

According to this fuel cell, even in a case where the fuel cartridge and the main body of the fuel cell are coupled and decoupled repeatedly through the coupler, sufficient sealing property can be secured and a significant drop in power generation capability of the main body of the fuel cell due to impurities such as metal ion eluting from a lubricant can be prevented.

Brief Description of the Drawings

FIG. 1 shows an embodiment of the coupler for a fuel cell according to the invention and includes a vertical sectional view of the coupler with its socket and plug being separated, a bottom view of the socket and a partially enlarged view of the plug.

FIG. 2 shows the embodiment of the coupler for a fuel cell according to the invention and includes a vertical sectional view of the coupler with its socket and plug being fitted and coupled and explanatory views showing contact state in the contact seal surfaces.

FIG. 3 includes front views and sectional views of an outer cap and an inner cap of an embodiment of the coupler for a fuel cell of the invention.

FIG. 4 includes sectional views of idling state and rotational state of the embodiment of the coupler for a fuel cell of the invention in which the outer cap and the inner cap are mounted.

FIG. 5 is a vertical sectional view showing the socket and the plug of another embodiment of the coupler for a fuel cell of the invention in which the socket and the plug are separated from each other.

FIG. 6 is a vertical sectional view of the embodiment of FIG. 5 in which the socket and the plug are fitted and coupled.

Description of Preferred Embodiments

Embodiments of the present invention will now be described in detail with reference to the drawings.

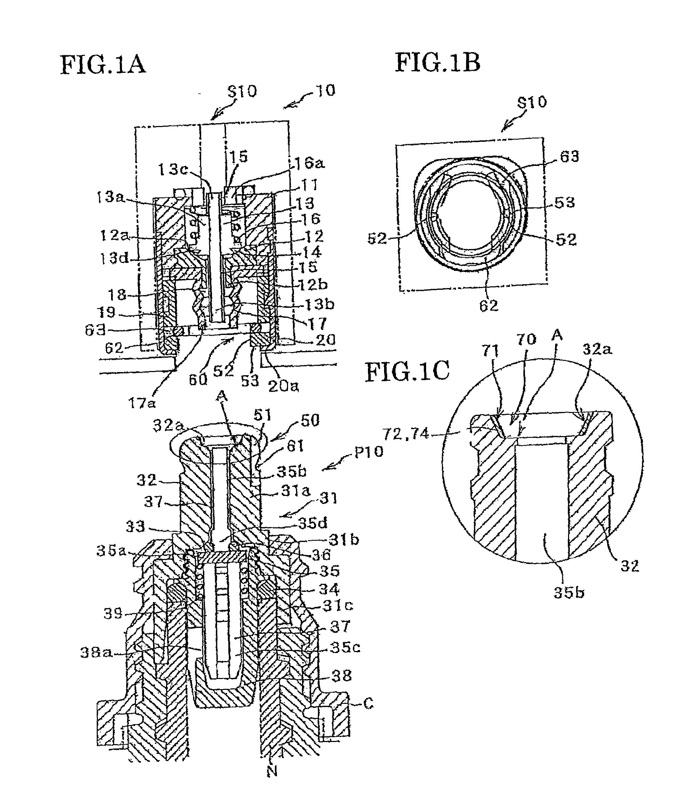

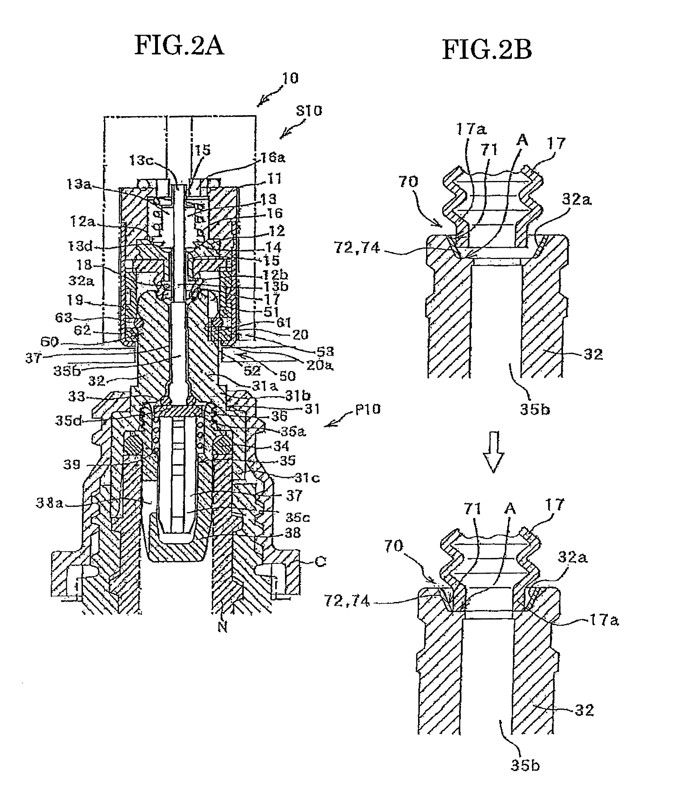

FIGs. 1 and 2 show an embodiment of the coupler for a fuel cell according to the present invention in which FIG. 1 is a vertical sectional view showing the socket and the plug constituting the coupler being separated and FIG. 2 is a vertical sectional view showing the socket and the plug being fitted and coupled and explanatory vies showing state of contact in the contact seal surface.

This coupler 10 for a fuel cell (hereinafter referred simply to as "coupler") comprises a socket S10 and a plug P10 which is coupled with the socket S10. The socket S10 is provided on the side, for example, of a main body of a methanol fuel cell and the plug P10 is provided on the side of a cartridge as a methanol container and, by communicating them with each other, fuel is supplied to the main body or the cartridge per se is exchanged. The main part of the socket S10 except for a part of component such as a spring is preferably made of a non-metal material such as polypropyrene (PP) and polyphenylene sulfide (PS), high density polyethylene (HDPE) and polystyrene (PS), super engineering plastics such as polyether ether ketone (PEEK) having a methanol-proof property and liquid crystal polymer (LCP) and general engineering plastics such as polyethylene terephthalate (PET), polybutylene terephthalate (PBT) and polyacetal (POM). The main part is preferably made also of rubber such as nitrile rubber (NBR), styrene-butadiene rubber (SBR), fluororubber (FKM), chloroprene rubber (CR) and ethylene propylene rubber (EPT, EPDM).

The following description will be made on the basis of the vertical direction in the drawings but this description does not restrict the direction of actual mounting on a container main body but mounting may be made in any direction.

In the socket S10 of the coupler 10, a socket member 11 which is of a generally cylindrical shape and has an inner space which constitutes a valve chamber is mounted in and fixed to a recessed mounting opening formed in a main body of a fuel cell.

A valve seat member 12 is attached to a lower end opening of the socket member 11 which has a valve seat 12a formed in a conical shape on the upper surface side and a cylindrical valve guide portion 12b which is integrally formed with the valve seat member 12 and projects downwardly in the central portion of the valve seat member 12.

A valve main body 13 is mounted in the valve chamber of the socket member 11 above the valve seat member 12. The valve main body 13 is composed integrally of a valve head 13a of a substantially columnar shape of a large diameter in the central portion, a valve stem 13b of a columnar shape of a small diameter projecting from the lower end of the central portion and a guide portion 13b projecting from the upper end of the central portion. The valve stem 13b is mounted in the valve guide portion 12b to reciprocate therein. An O ring groove 13d is formed in the lower end portion of the valve head 13a of the valve main body 13 and an O ring 14 is mounted in the O ring groove 13d. On the side surfaces of the valve stem 13b and the guide portion 13c in the lower and upper ends of the central portion, there are formed grooves which constitute flow paths 15. The valve chamber in which the valve main body 13 is located communicates with the fuel cell main body located above via these flow paths 15 and the valve chamber communicates also with a plug coupling portion below in which the plug is coupled via these flow paths 15.

A compression helical spring 16 is provided about the outside of the valve head 13a with its lower end portion being in abutting engagement with the valve head 13a and with its upper end portion being pressed by a spring pressing member 16a provided in the upper end portion of the socket member 11. The guide portion 13c of the valve main body 13 is mounted in a central opening formed in the spring pressing member 16a. The compression helical spring 16 is exposed to liquid fuel and, therefore, should preferably be made of a material which has good anti-corrosion property. For this purpose, a metal spring applied with a processing for converting the metal to a passive state or applied with gold coating may preferably be used.

By this arrangement, the valve main body 13 is always energized downwardly to close the valve by pressing the O ring 14 located in the O ring groove 13d of the valve head 13a to the valve seat 12a for sealing and to open the valve by separating the O ring 14 from the valve seat 12a against the force of the spring 16.

A rubber holder 17 as an elastic holder is provided below the valve seat member 12 in a manner to cover the valve stem 13b which reciprocates through the valve guide portion 12b. The upper flange portion of the rubber holder 17 abuts against the valve seat member 12 and the central opening of the rubber holder 17 abuts against the outer periphery of the valve guide portion 12b and the inside of the central opening constitutes a flow path. A bellows portion and a lower end seal portion 17a which constitutes a contact seal surface A contacting the plug are formed downwardly from the central opening. The bellows portion expands and contracts in a vertical direction owing to the shape and material of the bellows portion and thereby secures a flow path 18 in a sealed state.

A cylindrical housing 19 is provided outside of the rubber holder 17 and below the socket member 11 for forming a plug coupling space for coupling the plug P10. The socket member 11, the rubber holder 17 and the housing 19 are integrally connected to one another by a connecting cylinder 20 which is fitted from the outside of the lower end of the housing 19 on the outer peripheral surface. This connection is achieved firmly by, for connection with the socket member 11, fitting an engaging projection formed in the socket member 11 in an engaging recess formed in the connecting cylinder 20 and, for connection with the housing 19, by fitting a projection formed by cutting a part of the connecting cylinder 20 in U-shape and bending the cut portion inwardly to form a projection and fitting this projection in an engaging recess formed in the housing 19 and also by holding the flange portion of the rubber holder 17 tightly between the socket member 11 and the housing 19.

In the socket S10 constructed in the above described manner, the valve can be automatically closed and opened by operating the valve stem 13b of the valve main body 13 in accordance with coupling with the plug P10.

The main part of the plug P10 of the coupler 10 which is coupled with the socket S10 except for a part of component such as a spring is preferably made, in the same manner as in the socket S10, of a non-metal material such as polypropyrene (PP) and polyphenylene sulfide (PS), high density polyethylene (HDPE) and polystyrene (PS), super engineering plastics such as polyether ether ketone (PEEK) having a methanol-proof property and liquid crystal polymer (LCP) and general engineering plastics such as polyethylene terephthalate (PET), polybutylene terephthalate (PBT) and polyacetal (POM). The main part is preferably made also of rubber such as nitrile rubber (NBR), styrene-butadiene rubber (SBR), fluororubber (FKM), chloroprene rubber (CR) and ethylene propylene rubber (EPT, EPDM).

This plug P10 is mounted, as shown in FIGs. 1 and 2, on the outer periphery of the forward end portion of a nozzle N of an inner container in which methanol which is fuel of the fuel cell is contained. The plug P10 comprises a plug main body 31 of a cylindrical shape having substantially three steps which is held in position by a holding cap C which is screwed onto an outer container protecting the inner container. The upper portion 31a of the plug main body 31 has the smallest diameter and the lower portion 31c which continues to the middle portion 31b has the largest diameter.

In this plug main body 31, a projecting connecting portion 32 of a substantially cylindrical shape having the smallest diameter is formed projecting from the forward end portion of the plug main body 31 for being mounted in the connecting cylinder 20 constituting the plug connecting opening of the socket S10. In the forward end portion of this projecting connecting portion 32 is formed a seal recess 32a having a contact seal surface A in which the lower end seal portion 17a of the rubber holder 17 of the socket S10 is inserted and fitted. The central opening of the projecting connecting portion 32 has a diameter sufficient for receiving the valve stem 13b of the socket S10.

This seal recess 32a is formed, as shown in the enlarged view of FIG. 1, in a tapering recess having a top portion of an opening having a larger diameter than a bottom portion of the opening. By this tapered surface, the seal recess 32a can guide the rubber holder 17 of the socket S10 (FIG. 2B). Further, since this seal recess 32a is provided in a manner to depress the tip end surface of the plug P10, when the plug P10 is decoupled from the socket S10, remaining liquid fuel is received in this seal recess 32a whereby the socket S10 can be prevented from contacting the remaining liquid fuel.

The seal recess 32a may be formed in other shape than a tapered recess such, for example, as a cylindrical recess which can perform seal function at the bottom portion and receiving remaining liquid fuel.

The middle portion 31b having an intermediate diameter of the plug main body 31 has a conical surface formed inside thereof which constitutes a valve seat 33.

In the inner periphery of the cylindrical portion having the largest diameter of the lower portion 31c of the plug main body 31 is inserted the nozzle N of the inner container via an O ring 34. By holding a stepped portion between the middle portion 31b and the lower portion 31c of the plug main body 31 with the holding cap C screwed onto the nozzle of the outer container housing the inner container, the plug main body 31 is attached to the container.

In the inside of the plug main body 31 is mounted a valve main body 35 which is composed integrally of a valve head 35a in the middle portion in the form of a disk having substantially a large diameter, a valve stem 35b projecting from the upper central portion of the valve head 35a and having a small diameter and a guide portion 35c projecting from the lower central portion of the valve head 35a and having a large diameter. The valve stem 35b is located in the projecting connecting portion 32 to reciprocate therein.

In the upper end portion of the valve head 35a of the valve main body 35, there is formed an O ring groove 35d opposite to the valve seat 33 and an O ring 36 is mounted in the O ring grove 35d.

The valve stem 35b and the valve guide portion 35c are formed in their side surfaces with grooves which constitute flow paths 37 which communicate with the inside container via the lower valve guide portion 35c and communicate with the inside of the socket S10 which is coupled via the upper valve stem 35b.

For guiding reciprocal movement of the valve main body 35, a valve holder 38 having a substantially cylindrical shape is provided in a manner to enclose the outside of the guide portion 35c. The intermediate flange portion of the valve holder 38 is in abutting engagement with the end surface below the valve seat 33 of the middle portion 31b of the plug main body 31 and the O ring 34 of the inner container is in abutting engagement with the lower surface of the flange portion and the valve holder 38 is screwed onto the screw portion on the inner periphery of the valve main body 31.

A helical compression spring 39 is mounted on the outer periphery of the guide portion 35c of the valve main body 31 with its upper end portion being in abutting engagement with the valve head 35a and with its lower end portion being held by the intermediate projection of the valve holder 38. Since the compression helical spring 39 is exposed to liquid fuel, it should preferably be made of a material having good anti-corrosion property. For this purpose, a metal spring applied with a processing for converting the metal to a passive state or applied with gold coating may preferably be used.

By this arrangement, the valve main body 35 is always energized upwardly to close the valve by pressing the O ring 36 located in the O ring groove 35d of the valve head 35a to the valve seat 33 for sealing and open the valve by separating the O ring from the valve seat against the force of the spring 39.

In the lower side wall of the valve holder 38 is formed a flow path opening 38a to communicate with the inner container.

In the plug P10 constructed in this manner, the valve can be automatically closed and opened by operating the valve stem 35b of the valve main body 35 with coupling of the socket S10.

In this coupler 10, for enabling coupling of the socket S10 and the plug P10 of, e.g., a specific fuel concentration by discriminating them, a key and a key groove are provided as discrimination means. The key is provided in one of the socket S10 and the plug P10 and the key groove is provided in the other.

By performing coupling by using the key and the key groove as the discrimination means, discrimination can be made against the socket and the plug which cannot be coupled but, when force to rotate the socket S10 relative to the plug P10 about their central axis is applied, such rotation is restricted by the key and the key groove and this is likely to damage either the key or the key groove depending upon the magnitude of the force.

In this coupler 10, therefore, damage due to an excessive rotational force is prevented by enabling the key to rotate about the central axis.

In this coupler 10, as shown in FIG. 1, a key groove 51 as a discrimination means 50 is formed in the coupling direction in the outer side surface portion of the projecting connecting portion 32 of the plug main body 32 of the plug P10. The key groove is formed in two diagonal positions (only one is shown in FIG. 1A) in a length corresponding to the distance of coupling from the foremost end.

On the other hand, a key 52 which is fitted in the key groove 51 is integrally formed in the inner peripheral side of an annular key ring 53 which constitute the ring member in a manner to project in correspondence to the position of the key groove 51. This key ring 53 is disposed at the lower end of the housing 19 of the socket S10 and held by a caulked portion 20a formed at the lower end of the connecting cylinder 20 in such a manner that the key ring 53 can rotate about the central axis.

Accordingly, by fitting the key 52 formed in the key ring 53 mounted in the socket S10 in the key groove 51 of the plug P10, the socket S10 and the plug P10 can be discriminated.

Disposition of the key groove 51 and the key 52 is not limited to diagonal positions (positions of 180 degrees) but disposition at other different angle may be adopted or combinations of different shapes such as different widths and depths of the key groove and the key may be adopted so that a key groove and a key of a small size will not be fitted in a key groove and a key of a large size. Thus, by combining these, many types of the socket and the plug can be discriminated.

When an excessive rotational force to rotate the socket S10 and the plug P10 relative to each other about the central axis is applied, the key ring 53 is rotated and an excessive force is not applied to the socket S10 and the plug P10 and, therefore, damage or destruction can be prevented while the coupled state is maintained.

In this coupler 10, a coupling holding means 60 for holding coupling between the socket S10 and the plug P10 is provided. One part of the coupling holding means 60 is made of an engaging portion 61 and a counterpart of the coupling holding means 60 is made of an elastic engaging member 62. By inserting and pulling out the engaging portion 61 in a manner to override in straight direction and deform the elastic engaging member 62, coupling can be achieved by engagement of the engaging portion 61 with the elastic engaging member 62 and coupling can be released by pulling out the engaging portion 61.

In this coupler 10, a horizontal annular engaging groove is formed as the engaging portion 61 in the outer periphery of the upper portion of the projecting connecting portion 32 of the plug main body 31 of the plug P10 and the foremost end portion of the projecting connecting portion 32 is formed in an arcuate curved surface.

On the other hand, the elastic engaging portion 62 provided in the socket S10 is formed by a snap ring which is made by forming a spring material in substantially a U-shape with its opposite portions narrowing inwardly. As shown in FIG. 1A, a snap ring mounting groove 63 is formed integrally in the foremost end portion of the housing 19 and the elastic engaging portion 62 is mounted in the groove 63 so that it is held at the opening end portions and the U-shaped middle portion thereof and the opposite side portions are elastically deformed to open and close.

Therefore, by providing this coupling holding means 60, when the plug P10 is inserted in the socket S10, the foremost end portion of the projecting connecting portion 32 of the plug P10 is inserted in a manner to expand the snap ring which constitutes the elastic engaging portion 62 and, as the projecting connecting portion 32 is inserted to the engaging portion 61, the snap ring is narrowed and engaged in the engaging groove and coupling between the socket S10 and the plug P10 is thereby maintained.

Conversely, when the plug P10 is pulled out of the coupled state, the snap ring constituting the elastic engaging portion 62 is deformed in an expanding manner and is disengaged from the engaging groove of the engaging portion 61 and the plug P10 can be separated from the socket S10.

Although illustration is omitted, for not only releasing excessive rotational force by rotation of the key ring 53 but also releasing the fitted and coupled state automatically, a cam mechanism may be formed by providing a cam in the plug main body and a cam follower in the key ring 53 so that force will act in axial direction by rotation of the key ring 53.

By this cam mechanism, therefore, when rotational force exceeding a normal range of use is applied, damage can be prevented by rotation of the key ring 53 and the fitted and coupled state can be automatically released by generation of axial force whereby the plug P10 can be detached from the socket S10 safely and automatically without causing damage to the components of the main body.

According to this coupler 10, since the key groove 51 is provided in one of the socket S10 and the plug P10 and the key 52 which is fitted in this key groove 51 is provided in the ring member 53 which is provided in the other of the socket S10 and the plug P10, discrimination of the socket S10 and the plug P10 can be made by the key groove 51 and the key 52 and, moreover, when an excessive rotational force exceeding a normal range of use is applied, action of an excessive force can be prevented by rotation of the ring member 53.

By this arrangement, a predetermined set of the plug and socket can be accurately selected for coupling in supplying methanol in a container to a methanol fuel cell or exchanging a container per se and, in addition, damage due to an excessive rotational force can be prevented.

Further, according to this coupler 10, since the coupling holding means 60 for holding coupling of the socket S10 and the plug P10 is provided between the socket S10 and the plug P10, coupling of the socket S10 and the plug P10 can be accurately maintained.

According to this coupler 10, the coupling holding means is composed of the engaging portion 61 provided in one of the socket S10 and the plug P10 and the elastic engaging member 62 which is fitted in the engaging portion 61 is provided in the other and, therefore, engagement with the engaging portion 61 can be achieved by pushing the elastic engaging member 62 into the engaging portion 61 by utilizing elastic deformation of the elastic engaging member 62 and coupling can thereby be maintained and coupling can be released easily by pulling out the elastic engaging member 62.

Further, according to this coupler 10, since the key groove 51 and the key 52 are provided as the discrimination means 50 for discriminating the plug P10 and the socket S10, by changing shape (combination of width and depth or the like), disposition and number of the key groove 51 and the key 52, the plug P10 and the socket S10 can be discriminated in a simple manner.

A projection and a recess or the like means may be provided between contact surfaces of the key ring 53 which constitutes the ring member and the housing 19 or the connecting member 20 by which the key ring 53 is rotatably supported so that the projection and recess will function as rotation resisting means for resisting rotation when the key ring 53 is immobilized and enabling it to rotate when an excessive rotational force is applied. By this arrangement, in coupling of the socket S10 and the plug P10, the key ring 53 is immobilized and its rotation is restricted whereby connection between the key groove 51 and the key 52 can be made easily in a standstill state of the key ring 53 and when an excessive rotational force is applied, the key ring 53 is rotated by overriding of the projection from the recess and thereby damage can be prevented.

In the coupler 10, cap 40 is provided on the outside of the cap C of the outer container to cover and sealingly close the inner container, the outer container 214 and the projecting connection portion 32..

This cap (safety cap) 40 is composed of an inner cap 41 and an outer cap 42 respectively made of synthetic resin. The inner cap 41 covers the holding cap C and is screwed onto the cap by means of the screw portion in the base portion to sealingly close it. The outer cap 42 covers the inner cap 41 and is mounted thereon rotatably and also slidably within a limited distance in axial direction. By an operation to push down and rotate the outer cap 42, it can be rotated integrally with the inner cap 41 whereas by rotation only of the outer cap 42, it is rotated in idle rotation. By this arrangement, the cap 40 can function as a safety cap having a child resistance effect.

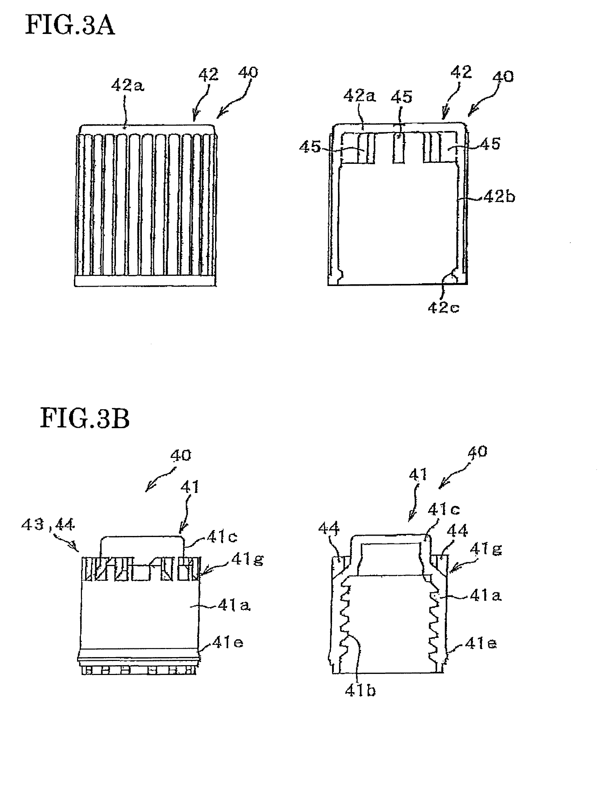

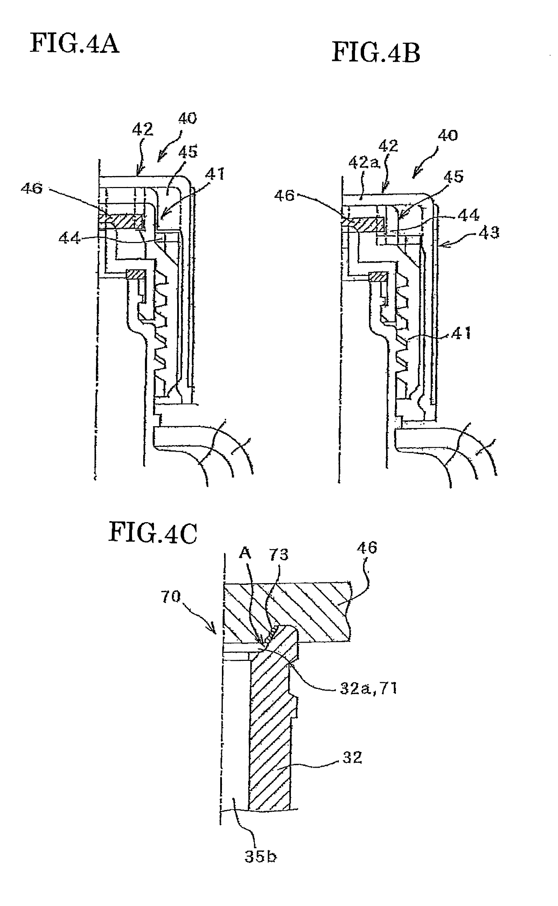

The inner cap 41 of this safety cap 40 is formed, as shown in FIGs. 3 and 4, generally in the form of a two-stepped cylinder having a bottom and this bottom is used as a ceiling of the inner cap. In the inner periphery of a large diameter cylindrical portion 41a of the inner cap 41 is formed a screw portion 41b which is screwed onto the screw portion of the holding cap C of the outer container 14.

A stepped portion 41g in a conical shape is formed on the outside of the large diameter portion 41a and the small diameter portion 41c of two-stepped cylinder. In this stepped portion 41g, there are provided a plurality (eight in the illustrated example) of ratchet teeth 44 of a ratchet mechanism 43 at an equal interval in the circumferential direction. The ratchet mechanism 43 constitutes the mechanism which enables the integral operation of the outer cap 42 with the inner cap 41 by the pushing down and rotation of the outer cap 42 and enabling idle rotation of the outer cap 42 by rotation only of the outer cap 42.

The outer cap 42 which covers this inner cap 41 is formed in a cylindrical shape having a bottom and this bottom is used as the ceiling 42a of the outer cap 42. A movement restricting portion 42c is provided in the inner periphery of the lower end portion of the cylindrical portion 42b for restricting the axial movement of the outer cap 42 within some distance to enable the outer cap 42 to be rotated integrally with the inner cap 41 or to be rotated idly. The movement restricting portion 42c is formed in the shape of an inwardly projecting horizontal projection and is engaged with the inner cap 41 below an axial direction movement restricting portion 41e of the inner cap 41 whereby upward movement of the outer cap 42 is restricted. On the other hand, lower movement of the outer cap 42 is restricted by abutting of its ceiling 42a with the ceiling of the inner cap 41 and, therefore, the outer cap 42 can move vertically between them (see the upper end position of FIG. 4A and the lower end position of FIG. 4B).

In the outer cap 42 , there are provided a plurality of ratchet pawls (eight in the illustrated example) of the ratchet mechanism 43 at an equal interval in the circumferential direction for enabling the outer cap 42 to rotate integrally with the inner cap 41 by the rotation and pushing down operation of the outer cap 42 and enabling the outer cap 42 to rotate idly by rotation only of the outer cap 42.

By this arrangement, in a state in which the outer cap 42 is pushed down, the ratchet pawls 45 are in meshing engagement with the ratchet teeth 44 of the inner cap 41 to enable the inner cap 41 to open or close.

In a state in which the outer cap 42 is not pushed down, the ratchet pawls 45 are located at upper surfaces of the respective teeth of the ratchet teeth 44 of the inner cap 41 and, even if the outer cap 42 is rotated, it is rotated in sliding along the ratchet teeth 44 and therefore is rotated idly without being connected with the inner cap 41.

Accordingly, if one attempts, for removing the safety cap, to rotate the outer cap 42 counterclockwise without pushing down the outer cap 42, the ratchet mechanism 43 rotates in idle rotation and the safety cap cannot be removed from the fuel cartridge by rotation of the inner cap 41. By this arrangement, a child resistance effect is performed and an erroneous removing of the safety cap 40 can be prevented whereby erroneous leakage or erroneous removal by a child of liquid fuel of the inner container of the fuel cartridge can be prevented.

In this ratchet mechanism 43, the ratchet pawls 45 merely slide along the ratchet teeth 44 in the case of idle rotation and, therefore, idle rotation torque can be reduced substantially to zero. For example, assuming that cap opening torque is about 30cN · m to 40cN · m, since the idling torque is substantially zero, the child resistance effect can be made clear.

An unillustrated cap is also attached to the socket S10 of the main body of the fuel cell so that the mounting opening is closed except when fuel is supplied by the fuel cartridge.

In the coupler 10 for a fuel cell constructed in this manner, for realizing smooth coupling between the socket S10 and the plug P10 and also improving seal at the contact seal surface A, lubricating property imparting means 70 is provided for imparting lubricating property to the contact seal surfaces A which are made of the foremost end seal portion 17a of the rubber holder 17 of the socket S10 and the foremost end recess 32a of the plug P10. As one type of this lubricating property imparting means 70, the above described foremost end recess 32a is formed as a tapering recess 71.

By forming the foremost end recess 32a as the tapering recess 71 to constitute the lubricating property imparting means 70, in a case where the socket S10 is fitted and coupled with the plug P10 of the coupler 10, even if the foremost end portion 17a of the rubber holder 17 is offset from the center of the tapered recess 71 as shown in FIG. 2B, the foremost end portion 17a is guided to the center of the bottom of the tapered recess 71 in a manner to slide down along the tapered surface and a predetermined contact seal state can thereby be achieved.

The lubricating property imparting means 70 may also be constructed by coating a lubricant on either or both of the foremost end seal portion 17a of the rubber holder 17 of the socket S10 and the foremost end recess 32 of the plug P10 which constitute the contact seal surfaces A so that a lubricating film 72 is formed by the lubricant to improve sliding property and close fitting property.

When the lubricating property imparting means 70 is constructed by forming the lubricating film 72 with the lubricant, refined fluorine oil or refined silicon oil, for example, may be used as the lubricant. Since there is possibility that the lubricant contacts the liquid fuel when the socket S10 and the plug P10 of the coupler are fitted and coupled, a non-eluting lubricant from which substance adversely affecting functions of the fuel cell, e.g., metal ion, will not elute should be employed. For this purpose, for example, a lubricant which is obtained by refining fluorine oil or silicon oil by the ion exchanging method, or such lubricant diluted with an organic solvent may preferably be used. As the organic solvent, hydrofluoroether (HFE) hydrochlorofluorocarbon (HCFC), isooctane and isopropyle alcohol (IPA), for example, may be cited.

Since it is necessary to maintain the contact seal surface A notwithstanding repeated coupling and decoupling of the coupler 10, the lubricant constituting the lubricating film 72 should preferably be added with an additive which prevents flowing down of the lubricant and thereby imparts an oil barrier property to the lubricant. As such additive, fluorocarbon, fluoroether, fluoroester and fluoroketone, for example, may be used.

As such lubricant added with an additive, for example, may preferably be used a non-eluting lubricant which has kinetic friction coefficient at the time when the lubricant is coated on a POM (polyacetal) plate which is 1/5 or below kinetic friction coefficient at the time when the lubricant is not coated, has 2.0 or below of (kinetic friction coefficient after conducting rinsing with methanol after coating)/(kinetic friction coefficient after coating), and has a cation index I of 60 or below, said cation index I being expressed by formula I = A+2B+3C where A represents concentration (ppb) of monovalent metal ion, B represent concentration (ppb) of metal ion other than monovalent metal ion or trivalent metal ion and C represents concentration (ppb) of trivalent metal ion respectively in a methanol solution of the lubricant when 0.2g of the lubricant is dissolved in 50ml of methanol solution (1% water) and is kept at 60°C for one week.

Cation index I of 60 or below is preferable because, even in a case where the coupler is used for a fuel cell or a cartridge for a fuel cell using fuel exhibiting acidity such as methanol solution, if cation index I is 60 or below, the lubricant has excellent non-eluting property and is not likely to obstruct power generation ability of the fuel cell. A particularly preferable lubricant is one which has kinetic friction coefficient at the time when the lubricant is coated which is 1/20 or below kinetic friction coefficient at the time when the lubricant is not coated, has 1.5 or below of (kinetic friction coefficient after conducting rinsing with methanol after coating)/(kinetic friction coefficient after coating), and has a cation index I of 10 or below.

A specific example of such preferable lubricant is one which comprises fluorine as an oil component and a flow-down preventing additive of a fluorine compound to such extent that lubricating property will not be impaired and does not contain a powder component (solid). Kinetic friction coefficient at the time whn this lubricant is coated on a POM plate is 0.014 of kinetic friction coefficient at the time when this lubricant is not coated, and kinetic friction coefficient B after conducting rinsing with methanol after coating is 0.011 of kinetic friction coefficient before rinsing with methanol so that B/A is 0.8. The cation index I of this lubricant is less than 1.

Kinetic friction coefficient and cation index were measured in the following manner with respect to this example and comparative examples to be described below:

Kinetic friction coefficient

Kinetic friction coefficient after coating on the POM plate was measured as follows: The lubricant was coated on a test plate of 100 mm X 100 mm by dipping or spraying. For measurement, a continuous loading type surface property measuring apparatus HEIDON was used. The stainless steel ball of 15.9 mm diameter at the tip of the test terminal was caused to contact the POM plate and vertical load of 285 g was applied. The stainless steel ball was fed by 20 mm at 600 mm/min. and kinetic friction coefficient was measured.

Kinetic friction coefficient after rinsing by methanol was measured in the following manner. The lubricant was coated on a test plate of 100 mm X 100 mm by dipping or spraying. The plate was fixed at an angle of 45° and rinsing was made by using a buret and dripping 6ml of 99% solution of methanol from height of 100 mm to the center of the plate in about 5 seconds.

Then, after methanol was dried, the continuous loading type surface property measuring apparatus HEIDON was used for measurement. The stainless steel ball of 15.9 mm diameter at the tip of the test terminal was caused to contact the test plate and vertical load of 285 g was applied. The stainless ball was fed by 20 mm at 600 mm/min. and kinetic friction coefficient was measured.

Cation index

The cation index was measured in the following manner: Metal ion concentration of methanol solution when 0.2 g of the lubricant was dissolved in 50 ml of 99% methanol solution (1% of water) and kept at 60°C for one week was measured by 1CP-MS and the cation index was measured by using the formula (1)

$$ I = A + 2B + 3C \quad \cdot \cdot \cdot \quad (1) $$

where A represents concentration (ppb) of monovalent metal ion, B represent concentration (ppb) of metal ion other than monovalent metal ion or trivalent metal ion and C represents concentration (ppb) of trivalent metal ion respectively in a methanol solution of the lubricant when 0.2g of the lubricant is dissolved in 50ml of methanol solution (1% water) and is kept at 60°C for one week.

In contrast to this example, the comparable examples shown in the following Table 1 which are all commercially available lubricants do not satisfy the requirements of the preferable lubricant of the present invention in some respect and, therefore, are not suitable as the lubricant to be used in the present invention.

Table 1

| Lubricant | Lubricant component | | Kinetic friction coefficient | | | Cation index |
|---|---|---|---|---|---|---|
| oil | powder | additive | A | B | B/A | |
| uncoated no | no | no | 0.465 | 0.465 | 1.0 | <1 |
| Com.Ex, 1 silicon | yes | no | 0.014 | 0.015 | 1.0 | 30 |
| Com.Ex.2 no | yes | no | 0.045 | 0.030 | 0.7 | <1 |
| Com.Ex.3 fluorine | no | no | 0.009 | 0.254 | 28.2 | <1 |
| Com.Ex.4 fluorine | no | no | 0.008 | 0.258 | 32.3 | <1 |
| Com.Ex.5 - | no | | 0.035 | 0.027 | 0.8 | 1600 |
| Com.Ex.6 fluorine | yes | yes | 0.016 | 0.016 | 1.0 | <1 |
| Com.Ex.7 fluorine | yes | yes | 0.024 | 0.045 | 1.8 | <1 |
| ("Com.Ex." represents Comparative Example) | | | | | | |

In Table 1, "oil" means an oil component, "powder" means a powder component (solid component), "additive" means a flow-down preventing additive such as a fluorine compound, "A" in kinetic friction coefficient means normal kinetic friction coefficient, "B" means kinetic friction coefficient after rinsing with methanol.

Since Comparative Examples 1, 2, 3 and 4 do not comprise an additive, they do not satisfy the above described requirements. Since Comparative Examples 3 and 4 exceed the above described requirements in B/A, Comparative Example 5 exceeds the above described requirements in cation index, and Comparative Examples 1, 2, 6 and 7 comprise a powder component, they do not satisfy the above described requirements.

By providing, as shown in an enlarged view of FIG.4, the lubricant film 73 by coating a lubricant on the packing 46 which contacts and seals the foremost end recess 32a of the plug P10 on the inner side of the cap 40 as the lubricating property imparting means 70 using such lubricant, when the cap 40 is removed and the plug P10 is fitted and coupled with the socket S10 on the side of the main body of the fuel cell, the lubricant is transferred to and coated onto the tapered recess 71 of the foremost end recess 32a of the plug P10 from the packing 46 and lubricating property and sliding property can thereby be improved and close fitting between the plug P10 and the socket S10 can be improved. Further, by transferring and coating from the packing 46, transferring is made when the plug P10 is used whereby necessary lubricant can be supplied each time it becomes necessary and a good lubricating state can be brought about.

The lubricating property imparting means 70 is not limited to the above described lubricating films 72 and 73 using the lubricant but it may be constructed by applying a lubricating coating. For example, a Teflon™ coating film 74 may be formed on an inner side surface of the tapered recess 71 to improve lubricating and sliding properties. The lubricating property imparting means 70 may also be applied to the rubber holder 17 in such a manner that at least the foremost end seal portion 17a is covered with a Teflon coating film.

The lubricating property imparting means 70 is not limited to the provision of the lubricating coating film 74 on the contact seal surface A but it may be constructed in such a manner that, when the projecting connecting portion 32 of the plug P10 is formed, a lubricating component such as erucic amide, stearic amide, oleic amide and behenic amide is added to a material of the projecting connecting portion 32 to impart lubricating property to the material so that lubricating and sliding properties will be imparted to the contact seal surface A. Such lubricating component may be applied to a material of the rubber holder 17.

The lubricating property imparting means 70 may be constructed by the above described tapered recess 71, lubricating films 72 and 73 or Teflon coating film 74 singly or in combination and a manner of combination may be selected as desired.

As described in the foregoing, according to the coupler 10 for a fuel cell, lubricating property is imparted by the lubricating property imparting means 70 to one or both of the contact seal surfaces A formed by fitting and coupling of the socket S10 and the plug P10 whereby the socket S10 and the plug P10 can be coupled smoothly and seal property can be secured by close fitting of the socket S10 and the plug P10.

Further, according to the coupler 10 for a fuel cell, since the lubricating property imparting means 70 is constructed of the lubricating film 72 made by coating the non-eluting lubricant which prevents elution of impurities, smooth coupling can be achieved by this lubricating film 72 made by coating this lubricant and seal property can be secured by close fitting of the socket S10 and the plug P10 and, moreover, an adverse effect to the fuel cell by eluting substance from the lubricant of the lubricating film 72 can be eliminated.

Further, according to the coupler 10 for a fuel cell, since the lubricating property imparting means 70 is constructed of the lubricating film 72 comprising the non-eluting lubricant which prevents elution of impurities by using refined oil or refined oil diluted with an organic solvent, smooth coupling can be achieved by this lubricating film 72 comprising this lubricant and seal property can be secured by close fitting of the socket S10 and the plug P10 and, moreover, an adverse effect to the fuel cell by eluting substance can be eliminated by the non-eluting lubricant which prevents elution of impurities with refined oil or refined oil diluted with an organic solvent.

Further, according to the coupler 10 for a fuel cell, since the lubricating property imparting means 70 is constructed of the lubricating film 72 made of the non-eluting lubricant which prevents elution of impurities added with an additive which prevents flow-down of the lubricant, holding of the lubricant to the contact seal surface A can be maintained sufficiently even in a case where the coupler is used repeatedly.

Further, according to the coupler 10 for a fuel cell, since the lubricating property imparting means 70 transfer the non-eluting lubricant which prevents elution of impurities or the non-eluting lubricant added with an additive from the lubricating film 73 coated on the packing 46 provided on the inner side of the cap 40 which covers and seals the plug P10 of the main body of the cartridge, sufficient lubricating property can be transferred and imparted in coupling and, in a normal state, an adverse effect of the lubricant to the main body of the fuel cell can be minimized.

Further, according to the coupler 10 for a fuel cell, since refined fluorine oil or refined silicon oil is used as the non-eluting lubricant used for the lubricating property imparting means 70, such oil can be obtained easily, can impart sufficient lubricating property in coupling and can minimize an adverse effect of the lubricant to the main body of the fuel cell.

Further, according to the coupler 10 for a fuel cell, since the recess 32a is formed in the foremost end portion of the insertion portion of the plug P10 and the contact seal surface A is formed in this recess 32a, the lubricant can function effectively with a small amount by, e.g., coating the lubricant in the recess 32a and seal property can be secured by close fitting of the socket S10 and the plug P10 and, moreover, remaining liquid fuel can be received and direct contact with the liquid fuel can prevented when the coupler 10 is decoupled.

Further, according to the coupler 10 for a fuel cell, since the lubricating property imparting means 70 is constructed in such a manner that the foremost end recess 32a in which the contact seal surface A is formed is formed as the tapered recess 71 with a top portion of an opening having a larger diameter than a bottom portion of the opening, sliding property is improved by its shape and smooth coupling can be achieved and seal property can be secured by close fitting of the socket S10 and the plug P10.

Further, according to the coupler 10 for a fuel cell, since the lubricating property imparting means 70 is formed as a lubricating component which is added to a material of one or both of the socket S10 and the plug P10, the material itself has lubricating property and the socket S10 and the plug P10 can be fitted closely and smoothly whereby sufficient sealing property can be secured.

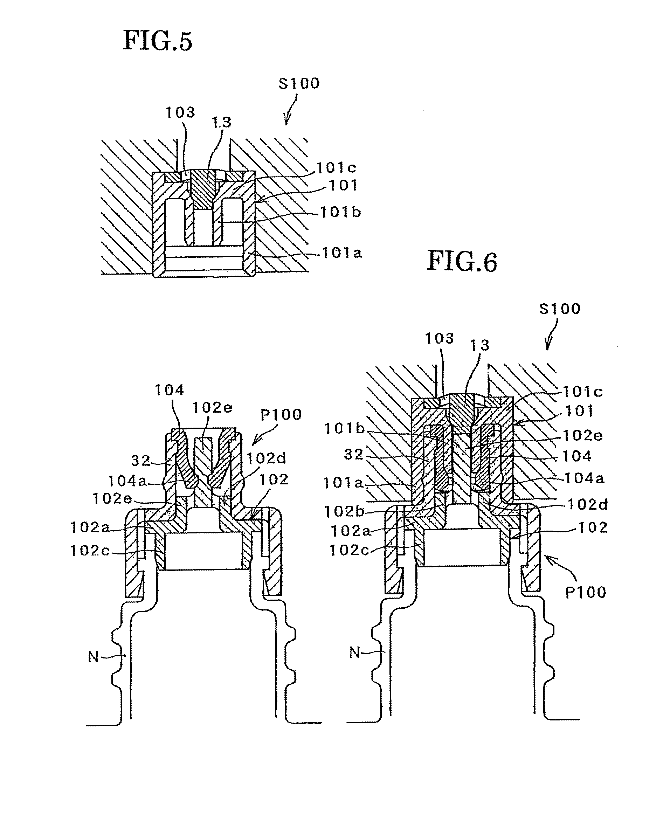

In the above described embodiments, components of the socket S10 and the plug P10 are formed by injection molding using a non-metal material such as a synthetic resin. However, products made by injection molding of a non-metal material have a limit in their accuracy and strength and, in a case where the coupler of the present invention is used for small devices, a product having superior accuracy and strength may be produced by press forming a metal material than by injection molding all materials which are non-metal materials. FIGs. 5 and 6 show an embodiment in which a part of the socket is formed by press forming a metal material.

In FIGs. 5 and 6, the same component parts having the same function as those in the embodiments of FIGs. 1 to 3 are designated by the same reference characters and description thereof will be omitted.

Referring to FIG. 5, in a socket 100, a valve seat member designated by reference character 101 has an outer cylinder 101a and an inner cylinder 101b which is shorter than the outer cylinder 101a. An upper portion which connects the outer cylinder 101a with the inner cylinder 101b constitutes a valve seat 101c. The valve seat member 101 corresponds to the valve seat member 12 and the housing 19 of the embodiment shown in FIG. 1. A valve 13 is seated on the valve seat 101c. The valve 13 is held by an annular leaf spring 103 in its central portion and urged downwardly by the leaf spring 103.

In the socket S100, the valve seat member 101 is formed by press forming a metal material and other members except for the valve seat member 101 are formed by molding a non-metal material such as synthetic resin or cross-linked rubber.

In a plug P100, a valve seat member 102 has an upper cylinder 102b rising from a central flange portion 102a and a lower cylinder 102c projecting downwardly from the flange portion 102a. The upper portion of the upper cylinder 102b is covered with a lid member 102d having plural opening which constitute flow-paths of liquid. In the central upper portion of the upper cylinder 102b, there is formed a columnar valve seat 102e projecting upwardly. The flange portion 102a is held and fixed between the inner wall of a stepped portion of a projecting connecting portion 32 and a top portion of a nozzle N.

A tapered cylindrical valve 104 with its opening widening upwardly which is made of an elastic material is fixed in its upper portion to a top portion of the projecting connecting portion 32 and is in pressing contact in its lower portion with the valve seat 102e due to its elasticity.

The plug P100 is made of a non-metal material in all of its component parts.

When the coupler is used, as shown in FIG. 6, the inner cylinder 101b of the valve seat member 101 of the socket S100 is inserted into the valve 104 of the plug P100. The lower portion of the valve 104 is thereby opened and detached from the valve seat 102e and the valve is thereby opened. On the other hand, the valve 13 of the socket S100 is pushed up by the valve seat 102e of the plug P100 against force of the leaf spring 103 and the valve thereby is opened. Accordingly, the socket S100 communicates with the plug P100 to form a flow path of liquid fuel.

In this structure, by forming the valve seat member 101 of the socket S100 by press forming a metal material, the valve seat member 101 can be produced in a small size but without decreasing its accuracy and strength whereby the socket as a whole can be made in a compact design.

As the metal material, various types of metal elements and alloys can be used. SUS material is a particularly preferable metal material because, by applying a processing to bring the material to a passive state after press forming, elution of a metal ion can be prevented even if the material comes into contact with methanol as a liquid fuel.

Non-metal materials used in this embodiment are the same materials used in the embodiments shown in FIGs. 1 to 3.

In the above described embodiments, a metal material is used as a part of the socket. Alternatively, a metal material may be used as a part of the plug or may be used for both of the socket and the plug. For processing of metal materials, press forming, sheet metal processing, die casting etc. may be used and there is no limitation in the manner of processing.

Industrial Applicability

The present invention can be applied to a coupler for a fuel cell consisting of a socket and a plug which can be detachably coupled together for supplying liquid fuel from a cartridge to a fuel cell. Particularly, the invention can be applied preferably to a coupler for a fuel cell which can secure sealing property at the time of attaching and detaching of the coupler when supply of liquid fuel is repeated frequently.

**Claims**

1. A coupler for a fuel cell comprising a socket comprising a valve provided in a main body of a fuel cell and energizing means for energizing the valve in closing direction, and a plug comprising a valve provided in a main body of a cartridge storing liquid fuel for the fuel cell and energizing means for energizing the valve in closing direction, said plug being detachably fitted and coupled with the socket for bringing about a sealed state and opening the valves to supply the liquid fuel, wherein lubricating property imparting means is provided for imparting lubricating property to at least one of contact seal surfaces formed by fitting and coupling of the socket and the plug.

2. A coupler for a fuel cell as defined in claim 1 wherein the lubricating property imparting means is formed by coating a non-eluting lubricant which prevents elution of impurities.

3. A coupler for a fuel cell as defined in claim 1 wherein the lubricating property imparting means comprises a non-eluting lubricant which prevents elution of impurities and is made of either refined oil or refined oil diluted with an organic solvent.

4. A coupler for a fuel cell as defined in any of claims 1 - 3 wherein the lubricating property imparting means comprises a non-eluting lubricant which prevents elution of impurities added with an additive which prevents flowing down of the lubricant.

5. A coupler for a fuel cell as defined in claim 4 wherein the non-eluting lubricant which is coated has kinetic friction coefficient at the time when the lubricant is coated on a POM plate which is 1/5 or below kinetic friction coefficient at the time when the lubricant is not coated, has 2.0 or below of (kinetic friction coefficient after conducting rinsing with methanol after coating)/(kinetic friction coefficient after coating), and has a cation index I of 60 or below, said cation index I being expressed by formula I = A+2B+3C where A represents concentration (ppb) of monovalent metal ion, B represent concentration (ppb) of metal ion other than monovalent metal ion or trivalent metal ion and C represents concentration (ppb) of trivalent metal ion respectively in a methanol solution of the lubricant when 0.2g of the lubricant is dissolved in 50ml of methanol solution (1% water) and is kept at 60°C for one week.

6. A coupler for a fuel cell as defined in any of claims 1 - 5 wherein the lubricating property imparting means comprises the non-eluting lubricant which prevents elution of impurities or the non-eluting lubricant added with the additive and the non-eluting lubricant is coated on a packing provided inside of a cap which covers and seals the plug in the main body of the cartridge so that the non-eluting lubricant can be transferred.

7. A coupler for a fuel cell as defined in any of claims 3 - 5 wherein the non-eluting lubricant used as the lubricating property imparting means is refined fluorine oil or refined silicon oil.

8. A coupler for a fuel cell as defined in any of claims 1 - 7 wherein the contact seal surface on which the lubricating property imparting means is provided is formed in a recess formed at the foremost end portion of an insertion portion of the plug.

9. A coupler for a fuel cell as defined in claim 8 wherein the recess in which the contact seal surface is provided is formed as a tapering recess with a top portion of an opening having a larger diameter than a bottom portion of the opening thereby improving lubricating property of the lubricating property imparting means.

10. A coupler for a fuel cell as defined in any of claims 1 - 9 wherein the lubricating property imparting means is formed as a lubricating component which is added to a material of at least one of the socket and the plug.

11. A fuel cell comprising a coupler for a fuel cell as defined in any of claims 1 - 10, a fuel cartridge having the plug constituting the coupler, a fuel storing unit provided in the main body of the fuel cell for storing the liquid fuel supplied from the main body of the cartridge and having the socket constituting the coupler which can be coupled with the plug, and a power generation unit which is provided in the main body of the fuel cell and is supplied with the liquid fuel for generating power.

FIG.1A

FIG.1B

FIG.1C

# FIG.2A

# FIG.2B

## FIG.3A

## FIG.3B

FIG.4A

FIG.4B

FIG.4C

## FIG.5

S100

103 13

101c
101
101b
101a

## FIG.6

S100

104
102e
P100
32
104a
102d
102e
102
102a
102c

N

103 13

S100

101c
101
102e
104
104a
102d
102
P100

101b
32
101a
102b
102a
102c

N

| **INTERNATIONAL SEARCH REPORT** | International application No. |
|---|---|
| | PCT/JP2007/069642 |

A. CLASSIFICATION OF SUBJECT MATTER
*H01M8/04*(2006.01)i, *C10M105/50*(2006.01)i, *C10M107/38*(2006.01)i,
*C10M107/50*(2006.01)i, *C10N30/00*(2006.01)n, *C10N30/06*(2006.01)n, *C10N40/34*
(2006.01)n, *C10N50/02*(2006.01)n, *F16L37/32*(2006.01)n
According to International Patent Classification (IPC) or to both national classification and IPC

B. FIELDS SEARCHED

Minimum documentation searched (classification system followed by classification symbols)
H01M8/04, F16L37/32

Documentation searched other than minimum documentation to the extent that such documents are included in the fields searched
Jitsuyo Shinan Koho         1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-222760 A  (Matsushita Electric Industrial Co., Ltd.), 18 August, 2005 (18.08.05), Par. Nos. [0047] to [0050]; Figs. 5, 6 (Family: none) | 1-11 |
| A | JP 2006-093001 A  (Toshiba Corp.), 06 April, 2006 (06.04.06), Full text & US 2006/0065312 A1 | 1-11 |
| A | JP 2005-259534 A  (NEC Corp.), 22 September, 2005 (22.09.05), Par. No. [0040] (Family: none) | 1-11 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 December, 2007 (20.12.07) | 08 January, 2008 (08.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2007/069642 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-048995 A  (Mitsubishi Pencil Co., Ltd.), 16 February, 2006 (16.02.06), Par. No. [0016] (Family: none) | 1-11 |
| A | CD-ROM of the specification and drawings annexed to the request of Japanese Utility Model Application No. 15992/1993(Laid-open No. 69589/1994) (Nitto Kohki Co., Ltd.), 30 September, 1994 (30.09.94), Full text (Family: none) | 1-11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005071713 A